# EUROPÄISCHE PATENTSCHRIFT

(11) **EP 3 549 246 B1**
(45) Veröffentlichungstag und Bekanntmachung des Hinweises auf die Patenterteilung: **03.03.2021**
(21) Anmeldenummer: 17777816.4
(22) Anmeldetag: 19.09.2017
(51) Int. Cl.: H02K 35/02, G01P 3/481, G01P 3/487

(54) **SPANNUNGSGENERATOR**
VOLTAGE GENERATOR
GÉNÉRATEUR DE TENSION

(30) Priorität: 01.12.2016 DE 102016123210
(43) Veröffentlichungstag der Anmeldung: 09.10.2019
(73) Patentinhaber: Centitech GmbH, 52068 Aachen (DE)
(72) Erfinder: LÖKEN, Michael, 52428 Jülich (DE)
(74) Vertreter: terpatent Patentanwälte ter Smitten Eberlein-Van Hoof Rütten Daubert
(86) Internationale Anmeldenummer: PCT/EP2017/073583
(87) Internationale Veröffentlichungsnummer: WO 2018/099625

(56) Entgegenhaltungen:
- DE-A1- 2 933 337
- DE-A1- 3 006 585
- DE-A1- 4 202 240
- US-A- 3 793 532

## Beschreibung

Die Erfindung betrifft einen Spannungsgenerator zur Umwandlung eines beweglichen magnetischen Feldes in elektrische Spannung. Der Spannungsgenerator umfasst eine Erregereinheit, die zumindest einen an einem drehbar und/oder verschiebbar gelagerten Körper, wie eine Welle, angeordneten Magneten, insbesondere Permanentmagneten, zur Erzeugung eines Magnetfeldes aufweist. Das Magnetfeld folgt dabei der Bewegung des Körpers. Eine mit der Erregereinheit funktional zusammenwirkende Wandlereinheit weist einen von dem Magnetfeld magnetisierbaren Magnetisierungs-Draht auf. Die Magnetisierung des Magnetisierungs-Drahts kann dabei von einem der bewegten Magneten bzw. dem Magnetfeld geändert werden, indem zumindest in einem Magnetfelderfassungsbereich eine magnetische Flussrichtung in dem Magnetisierungs-Draht durch das Magnetfeld änderbar ist. Ferner ist eine mit der Wandlereinheit funktional zusammenwirkende Stromleitungseinheit vorgesehen, die eine um die Wandlereinheit, insbesondere den Magnetisierungs-Draht angeordnete elektrische Spule mit einem elektrisierbaren Stromleiter-Draht aufweist, wobei der Magnetisierungs-Draht über seinen Querschnitt einen hartmagnetischen Teil und einen weichmagnetischen Teil aufweist. Hierbei ist durch die Änderung der magnetischen Flussrichtung des Magnetisierungs-Drahts in dem Stromleiter-Draht eine elektrische Spannung induzierbar.

Derartige Spannungsgeneratoren können insbesondere zur Erzeugung von elektrischer Energie aus einer mechanischen Bewegung genutzt werden, ohne dass mechanische Verschleißteile und/oder verschleißbehaftete chemische Energiespeicher, wie Batterien, erforderlich sind. Dadurch können beispielsweise elektronische Schaltungen aus marktüblichen Bauteilen gespeist werden. Dabei Ist die Energieerzeugung nahezu unabhängig von der Geschwindigkeit der mechanischen Bewegung.

Insbesondere bei Drehwinkelmesseinrichtungen zur Erfassung einer Bewegung, insbesondere einer Drehbewegung einer Welle, kann ein solcher Spannungsgenerator besonders vorteilhaft eingesetzt werden. Hierbei ist der Permanentmagnet zumeist an einem Wellenende und der Magnetisierungs-Draht mit dem Stromleiter-Draht axial beabstandet von dem Magneten angeordnet. Eine solche Erfassungseinrichtung ist beispielsweise aus der DE 20 2015 103 893 U1 bekannt. Hierbei wird durch eine Umpolung bzw. Änderung der Magnetisierung eines Impulsdrahtes in einem um den Impulsdraht angeordneten Induktionsdraht eine relativ geringe elektrische Spannung induziert. Die erzeugte Spannung ist derart gering, dass diese lediglich für eine kurze Weiterleitung und anschließende Auswertung eines Messsignals zur Lageerkennung einer Welle dienen kann. Aus der gattungsgemäßen US 3,793,532 A ist ein Spannungsgenerator bekannt bei dem der Magnetisierungs-Draht über seinen Querschnitt einen hartmagnetischen Teil und einen weichmagnetischen Teil aufweist und um einen Tragkörper gewickelt ist und dabei in eine Vergussmasse eingebunden ist, was aufwendig und teuer in der Herstellung ist.

Der Erfindung liegt daher die Aufgabe zugrunde, einen Spannungsgenerator bereitzustellen, der eine besonders effiziente Spannungsinduktion in dem Stromleiter-Draht und dadurch eine relativ große und zu weiteren Zwecken nutzbare induzierte elektrische Spannung ermöglicht.

Die Lösung der Aufgabe erfolgt erfindungsgemäß durch einen Spannungsgenerator mit den Merkmalen des Anspruchs 1. Vorteilhafte Ausgestaltungen und Weiterbildungen der Erfindung sind in den Unteransprüchen, der Beschreibung sowie den Figuren aufgeführt.

Erfindungsgemäß weist der Magnetisierungs-Draht einen hartmagnetischen Metallkern und einen weichmagnetischen Metallmantel auf, wobei dieser um einen Tragkörper gewickelt ist und eine axiale Zugspannung aufweist. Unter einem hartmagnetischen Teil ist ein Materialbereich mit einer relativ hohen magnetischen Koerzitivfeldstärke und unter einem weichmagnetischen Teil ein Materialbereich mit einer relativ geringen Koerzitivfeldstärke zu verstehen. Dies kann beispielsweise zu einer unterschiedlich ausgeprägten Um-Magnetisierung zur Entwicklung von Barkhausen-Sprüngen genutzt werden. Der Magnetisierungs-Draht ist um einen Tragkörper gewickelt und weist eine axiale Zugspannung auf. Diese mechanische Zugspannung kann bei einem Aufwickeln des Drahtes um den Tragkörper und/oder durch andere geeignete Mittel zeitlich nach dem Aufwickeln erzeugt werden. Durch die biomorphe Anordnung des hartmagnetischen Teils und des weichmagnetischen Teils können die beiden Teile eine unterschiedliche bzw. magnetische Flussrichtung aufweisen. Insbesondere kann jeder dieser Teile entlang der Drahtachse eine eigene Polung aufweisen. Der bimorphe Aufbau des Magnetisierungs-Drahts kann dadurch bei Überschreiten einer kritischen äußeren magnetischen Feldstärke zu einer schnellen Um-Magnetisierung der Drahtteile in Form eines großen Barkhausen-Sprunges führen. Die Flussrichtung in den beiden Teilen des Magnetisierungs-Drahtes muss dabei nicht gleich ausgerichtet sein, sondern kann entgegengesetzt zueinander sein. Es ist durchaus möglich und vorteilhaft, dass die Ausrichtung der magnetischen Flussrichtung der beiden Teile in einer Abhängigkeit zueinander stehen und insbesondere dann, wenn die magnetische Flussrichtung in einem der beiden Teile geändert wird, die magnetische Flussrichtung des anderen Teils in die gleiche Richtung geändert wird. Dieser durch die Magnetisierungsänderung bewirkte relativ große magnetische Impuls bzw. Puls in dem Magnetisierungs-Draht bewirkt in der Folge in dem als Spule um den Magnetisierungs-Draht angeordneten Stromleiter-Draht die Induktion einer elektrischen Spannung. Um den magnetischen Impuls in dem Magnetisierungs-Draht weiter zu verstärken, ist es erfindungsgemäß vorgesehen, dass der Magnetisierungs-Draht unter Bildung einer mechanischen Zugspannung um einen Tragkörper gewickelt ist. Die Umwicklung des Magnetisierungs-Drahtes um den Tragkörper bewirkt, dass eine Vielzahl magnetisch wirksamer Magnetisierungsdrahtabschnitte bzw. -segmente parallel in einem "Drahtbündel" angeordnet sind. Dadurch kann eine Überlagerung der durch das bewegte Magnetfeld in den einzelnen Magnetisierungs-Drähten hervorgerufenen Einzelpulsen stattfinden, welches in einem Auslösen eines relativ großen magnetischen Gesamtpuls resultiert. Ferner kann durch die Bildung einer mechanischen Zugspannung in dem Magnetisierungs-Draht eine besonders rasche und impulsartige Magnetisierungsänderung in Längserstreckung des Magnetisierungs-Drahtes bewirkt werden, so dass aus einer vergleichsweise langsamen und in ihrer Geschwindigkeit variabel auftretenden Magnetfeldänderung eine sprunghafte Magnetisierungsänderung erzeugt werden, und in der Folge dieser schlagartigen und flächendeckenden Magnetisierungsänderung eine relativ große Pulsenergie freigesetzt wird, die nach den Gesetzen der magnetischen Induktion sodann in dem Stromleiter-Draht eine besonders große elektrische Spannung generieren kann. Die somit generierte elektrische Spannung kann - je nach Ausgestaltungsgröße des Spannungsgenerators - beispielsweise für ein autarkes Betreiben einer ganzen Vorrichtung genutzt werden. Insbesondere kann die elektrische Spannung zur Detektion einer Bewegung und/oder zur Spannungsversorgung elektronischer Schaltungen verwendet werden. Zusammengefasst lässt sich mit dem erfindungsgemäßen Spannungsgenerator mit einem relativ einfachen technischen Aufbau eine verschleißfreie Umwandlung kinetischer in elektrische Energie ermöglichen.

Vorzugsweise ist der Magnetisierungs-Draht derart ausgebildet, dass der hartmagnetische Teil und der weichmagnetische Teil eine unterschiedliche Magnetisierung aufweisen können. Dadurch kann insbesondere ein schlagartiges "Umklappen" der magnetischen Flussrichtung in einem der beiden Teile bewirkt werden, wodurch ein relativ großer Impuls erzeugbar ist und in dem Stromleiter-Draht eine relativ große elektrische Spannung induzierbar ist.

Vorzugsweise ist der Magnetisierungs-Draht derart ausgebildet, dass eine Änderung eines äußeren Magnetfeldes eine sprunghafte Änderung der Magnetisierung des hartmagnetischen Teils und/oder eine sprunghafte Änderung der Magnetisierung des weichmagnetischen Teils entlang der Drahtachse auslöst. Insbesondere kann ein sich veränderndes geeignetes äußeres Magnetfeld zunächst eine Änderung der Magnetisierung des weichmagnetischen Teils und sodann zusätzlich eine Änderung der Magnetisierung des hartmagnetischen Teiles in Richtung des äußeren Magnetfeldes auslösen. Dadurch kann in dem Magnetisierungs-Draht ein relativ großer magnetischer Impuls erzeugt werden, der in dem Stromleiter-Draht eine relativ große elektrische Spannung bewirkt. Alternativ könnte grundsätzlich auch bei einer Änderung der magnetischen Flussrichtung des einen Teils des Drahtes die magnetische Flussrichtung des anderen Teils des Drahtes "mitgezogen" werden, das heißt die magnetische Flussrichtung beider Teile wird unmittelbar aufeinander folgend in eine Richtung geändert.

Vorzugsweise ist der Magnetisierungs-Draht über seine Längserstreckung verdrillt ausgebildet. Dadurch kann in dem Magnetisierungs-Draht eine besonders rasche und effektive Magnetisierungsänderung in Längserstreckung des Magnetisierungs-Drahtes bewirkt werden, so dass in der Folge dieser schlagartigen und flächendeckenden Magnetisierungsänderung in dem Stromleiter-Draht eine besonders große elektrische Spannung induzierbar ist.

Vorzugsweise ist die Wickelrichtung des Magnetisierungs-Drahtes senkrecht zu der Wickelrichtung des Stromleiter-Drahtes ausgerichtet. Dadurch kann die Induktion in dem Stromleiter-Draht, der als eine Spule um den Magnetisierungs-Draht gewickelt ist, auf einen Stromleiter-Drahtabschnitt begrenzt und somit die Generierung elektrischer Spannung in dem Stromleiter-Draht vergrößert werden kann.

Vorzugsweise weist der Magnetisierungs-Draht zwei axiale Drahtenden auf, mit denen der Magnetisierungs-Draht an dem Tragkörper befestigt ist. Insbesondere kann ausschließlich ein einziger Magnetisierungs-Draht mehrfach um den Tragkörper gewickelt sein. Durch die Befestigung der beiden Enden des Magnetisierungs-Drahts an dem Tragkörper kann die auf den Magnetisierungs-Draht wirkende mechanische Zugspannung dauerhaft und in relativ einfacher Weise aufrecht erhalten bleiben.

Vorzugsweise weist der Magnetisierungs-Draht zwei axiale Drahtenden auf, die stoffschlüssig, kraftschlüssig und/oder formschlüssig miteinander verbunden sind. Dadurch ist eine dauerhafte Fixierung des Drahtes an dem Tragkörper sowie eine relativ kostengünstige Herstellung der Wandlereinheit ermöglicht.

Vorzugsweise ist der Tragkörper plattenförmig ausgebildet ist und der Magnetisierungs-Draht in Längserstreckung des Tragkörpers um den Tragkörper gewickelt ist. Dadurch kann der Magnetisierungs-Draht über eine relativ breite Fläche um den Tragkörper aufgewickelt sein, so dass die nahezu parallel angeordneten Magnetisierungs-Drähte eine relativ breite Fläche ausbilden. Somit kann der Magnetisierungs-Draht bzw. ein der Erregereinheit zugewandter, im Wesentlichen flächig ausgebildeter Magnetisierungs-Drahtabschnitt besonders effektiv von dem bewegten Magnetfeld beeinflusst werden. Insbesondere kann eine Änderung der magnetischen Flussrichtung in dem Magnetisierungs-Draht über die gesamte der Erregereinheit zugewandten Fläche des um den plattenförmig ausgebildet Tragkörper gewickelten Magnetisierungs-Draht erfolgen, so dass ein relativ großer magnetischer Gesamtimpuls erzeugt werden kann, der in dem Stromleiter-Draht eine relativ große elektrische Spannung bewirkt,

Vorzugsweise ist der Tragkörper in Längserstreckung längenveränderbar ausgebildet. Dadurch kann die Länge des Tragkörpers für jeden Anwendungsfall, das heißt für jede geforderte Tragkörper-Länge und/oder elektrische Spulengröße individuell und besonders kostengünstig hergestellt werden,

Besonders bevorzugt ist der Tragkörper geeignet, auch nach einer Bewicklung mit dem Magnetisierungs-Draht in Längserstreckung längenveränderbar ausgebildet zu sein bzw. seine Längenausdehnung zu vergrößern und/oder verkleinern. Dadurch kann insbesondere die auf den Magnetisierungs-Draht wirkende mechanische Zugspannung mittels des Tragkörpers beibehalten bzw. verstärkt oder verringert werden. Insbesondere kann dadurch die auf den Magnetisierungs-Draht wirkende mechanische Zugspannung auch nach dem Aufwickeln des Magnetisierungs-Drahtes auf den Tragkörper noch individuell eingestellt werden. Folglich kann insbesondere das Zusammenspiel zwischen der Erregereinheit und Wandlereinheit individuell und auch nach einer Montage der einzelnen Komponenten feinjustiert werden, wodurch eine optimale Effektivität dieses Zusammenspiels, insbesondere die Auslösung einer Magnetisierungsänderung, erreicht werden kann.

Vorzugsweise weist der Tragkörper einen ersten Tragkörperteil und einen zweiten Tragkörperteil auf, wobei zwischen dem ersten Tragkörperteil und dem zweiten Tragkörperteil ein Vorspannelement angeordnet ist, das die beiden Tragkörperteile des Tragkörpers voneinander weg vorspannt. Dadurch kann der Tragkörper in besonders einfacher Weise in seiner Länge verändert werden. Ferner kann der Tragkörper mittels der Vorspannkraft zwischen den beiden Tragkörperteilen die auf den Magnetisierungs-Draht wirkende mechanische Zugspannung in besonders einfacher Weise unterstützen.

Das Vorspannelement kann grundsätzlich beliebig ausgebildet sein. Beispielsweise als eine ineinander steckbare oder schraubbare Rohrverbindung. Vorzugsweise ist das Vorspannelement als eine elastische Feder ausgebildet. Dadurch kann eine Vorspannung dauerhaft gehalten werden und eine natürlich auftretende Längenveränderung des Tragkörpers und des Magnetisierungs-Drahtes, beispielsweise aufgrund einer variierenden Umgebungstemperatur, automatisch ausgeglichen werden, so dass die auf den Magnetisierungs-Draht wirkende mechanische Zugspannung dauerhaft konstant gehalten werden kann.

Vorzugsweise entspricht die Breite der elektrischen Spule im Wesentlichen der Länge des Tragkörpers. Dadurch kann die maximal mögliche Breite der Spule zum Induzieren einer elektrischen Spannung genutzt werden, wodurch der Induktionseffekt in dem Stromleiter-Draht dadurch besonders effektiv und der Spannungsgenerator besonders effizient ist.

Vorzugsweise ist der Stromleiter-Draht mit einer Speichereinrichtung zur Speicherung elektrischer Energie verbunden. Dadurch kann die induzierte elektrische Spannung zunächst zwischengespeichert und zu einem gewünschten Zeitpunkt wieder abgerufen werden.

Nachfolgend wird die Erfindung anhand zwei bevorzugter Ausführungsformen unter Bezugnahme auf die anliegenden Zeichnungen näher erläutert. Es zeigen schematisch:
- Figur 1:: eine erste Ausgestaltung eines erfindungsgemäßen Spannungsgenerators in perspektivischer Darstellung,
- Figur 2:: den Spannungsgenerator aus Figur 1 in einer seitlichen Schnittdarstellung,
- Figur 3:: eine zweite Ausgestaltung eines erfindungsgemäßen Spannungsgenerators in einer seitlichen Schnittdarstellung, und
- Figur 4:: eine Ausgestaltung des Magnetisierung-Drahtes.

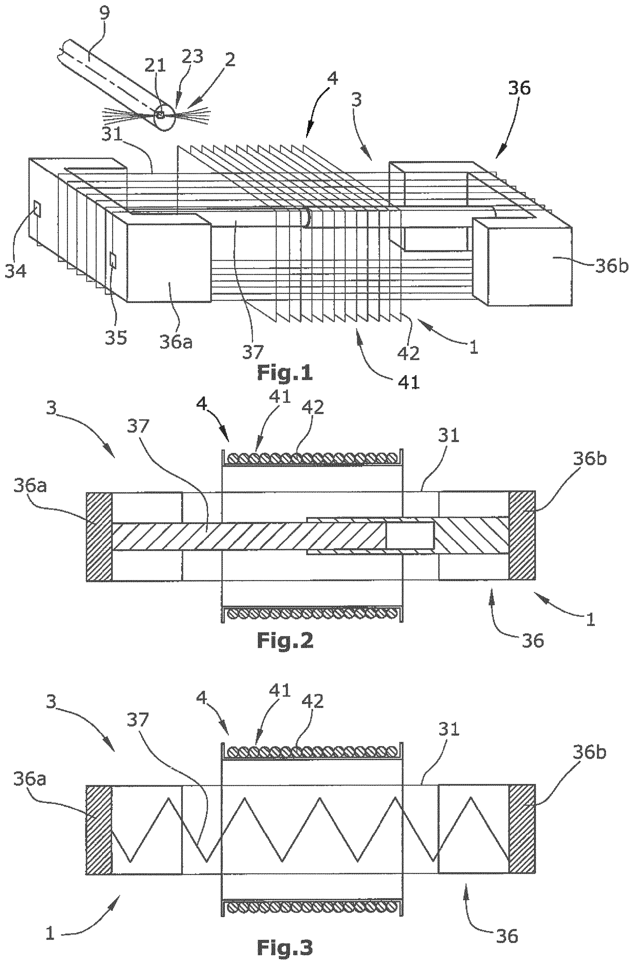

In den Figuren 1 und 2 ist jeweils eine erste erfindungsgemäße Ausgestaltung eines Spannungsgenerators 1 zur Umwandlung eines beweglichen magnetischen Feldes 23 in eine elektrische Spannung gezeigt. Hierzu umfasst der Spannungsgenerator 1 eine an einem bewegbaren Körper 9 angeordnete Erregereinheit 2, eine mit der Erregereinheit 2 funktional zusammenwirkende feststehende Wandlereinheit 3 und eine mit der Wandlereinheit 3 funktional zusammenwirkende Stromleitungseinheit 4.

Die Erregereinheit 2 ist vorliegend an einer Welle 9 angeordnet, beispielsweise an einer Antriebswelle eines nicht dargestellten Motors. Die Erregereinheit 2 umfasst zumindest einen Magneten 21 zur Erzeugung eines Magnetfeldes 23. Der Magnet 21 weist einen Nordpol und einen Südpol auf und ist insbesondere zentrisch an einer Stirnseitenwand 91 der Welle 9 angeordnet. Selbstverständlich ist es möglich, dass auch mehr als ein Magnet 21 an der Welle 9 angeordnet sind. Durch die Anordnung des Magneten 21 an der Stirnseitenwand 91 wird in diesem Bereich ein magnetisches Feld 23 erzeugt, das bei einer Drehung der Welle 9 der Wellenbewegung folgt. In einem geringen axialen Abstand zu der Stirnseite 91 bzw. zu dem Magneten 21 ist die Wandlereinheit 3 angeordnet.

Die Wandlereinheit 3 ist feststehend angeordnet und weist einen Trägerkörper 36 auf, um den ein von dem Magnetfeld 23 magnetisierbarer Magnetisierungs-Draht 31 gewickelt ist. Dadurch kann bei einer Drehung der Welle 9 bzw. des Magneten 21 bzw. des Magnetfeldes 23 in dem Magnetisierungs-Draht 31 eine magnetische Flussrichtung geändert werden.

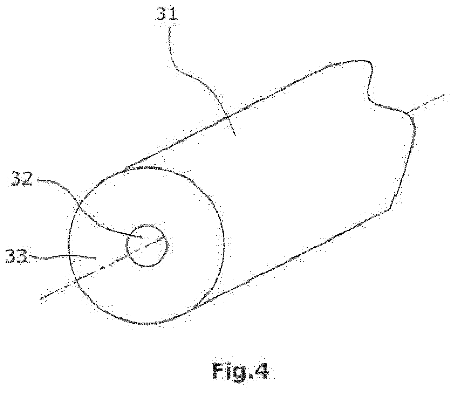

Der Magnetisierungs-Draht 31 weist vorliegend einen hartmagnetischen Metallkern 32 und einen weichmagnetischen Metallmantel 33 auf, welches in der Figur 4 näher dargestellt ist. Hierbei kann der hartmagnetische Kern 32 eine andere magnetische Flussrichtung aufweisen als der weichmagnetische Mantel 33. Durch das von dem Magneten 21 erzeugte Magnetfeld 23 ist in dem Magnetisierungs-Draht 31 eine magnetische Flussrichtungsumkehr möglich. Insbesondere erfolgt eine solche Umkehrung der magnetischen Flussrichtung, sobald das Magnetfeld 23 aufgrund der Drehung der Welle 9 mit dem Nord- oder Südpol an dem Magnetisierungs-Draht 31 vorbeieilt. Es ist möglich, dass zunächst die magnetische Flussrichtung in dem äußeren weichmagnetischen Mantel 33 geändert wird und in der Folge hieraus auch In dem hartmagnetischen Kern 32. Selbstverständlich ist dieser Vorgang auch in umgekehrter Richtung möglich. Somit wird eine Änderung der magnetischen Flussrichtung in dem Magnetisierungs-Draht 31 bewirkt, welches auch als "Barkhausen-Effekt (-Sprung)" bezeichnet wird. Um diesen Effekt zu verstärken, ist es vorgesehen, dass der Magnetisierungs-Draht 31 über seine Längserstreckung verdrillt ausgebildet ist und eine mechanische Zugspannung aufweist. Dazu ist der Magnetisierungs-Draht 31 erfindungsgemäß mit seinen beiden axialen Drahtenden 34, 35 an dem Tragkörper 36 befestigt und unter Bildung einer mechanischen Zugspannung, insbesondere mehrfach um einen Tragkörper 36 gewickelt,

Der Trägerkörper 36 kann grundsätzlich als ein herkömmlicher, insbesondere einteiliger und plattenförmiger, Spulenträger ausgebildet sein, um den der Magnetisierungs-Draht 31 vorzugsweise in Längserstreckung des Tragkörpers 36 herumgewickelt ist. Bei der in den vorliegenden Figuren gezeigten Ausgestaltung des Trägerkörpers 36 ist dieser nicht einteilig ausgebildet, sondern weist zwei Trägerkörperteile auf, nämlich einen ersten Tragkörperteil 36a und einen zweiten Trägerkörperteil 36b. Zwischen dem ersten Trägerkörperteil 36a und dem zweiten Trägerkörperteil 36b ist ein die beiden Trägerkörperteile 36a, 36b verbindendes Vorspannelement 37 angeordnet. Das Vorspannelement 37 kann grundsätzlich in verschiedenen Varianten ausgebildet sein.

Bei der in Figuren 1 und 2 gezeigten ersten Ausgestaltung des Spannungsgenerators 1 ist das Vorspannelement 37 als eine aus zwei Stäben 37a, 37b gebildete Stabverbindung ausgebildet, wobei die beiden Stäbe 37a, 37b gegeneinander verschraubbar sind. Dadurch kann bei einem Verschrauben der beiden Stäbe 37a, 37b gegeneinander beispielsweise der Trägerkörper 36 in seiner Länge verändert werden bzw. eine Vorspannkraft auf die beiden Trägerkörperteile 36a, 36b erzeugt werden, beispielsweise zum Vorspannen des Magnetisierungs-Drahts 31. Dadurch kann beispielsweise eine nachträgliche Zugstresseinbringung auf einen bereits auf einen Trägerkörper 36 ohne Zugspannung gewickelten Magnetisierungs-Draht 31 bewirkt werden.

Bei der in Figur 3 gezeigten zweiten Ausgestaltung des Spannungsgenerators 1 ist das Vorspannelement 37 zur Erzeugung einer Vorspannkraft zwischen dem ersten Tragkörperteil 36a und dem zweiten Tragkörperteil 36b als eine elastische Feder ausgebildet. Dadurch kann die Vorspannung der beiden Tragkörperteile 36a, 36b gegeneinander bei einer an dem Tragkörper 36 auftretenden Längenveränderung, beispielsweise verursacht durch eine veränderte Umgebungstemperatur, automatisch ausgeglichen werden. Dadurch kann die auf den Magnetisierungs-Draht 31 wirkende mechanische Zugspannung dauerhaft konstant gehalten werden und eine besonders effektive Impulserzeugung in dem Magnetisierungs-Draht 31 bewirkt werden, wodurch in der Stromleitungseinheit 4 eine relativ große elektrische Spannung induzierbar ist.

Die Stromleitungseinheit 4 weist hierzu eine senkrecht zu der Längserstreckung der Wandlereinheit 3 und um die Wandlereinheit 3 angeordnete elektrische Spule 41 mit einem elektrisierbaren Stromleiter-Draht 42 auf. Insbesondere ist die Wickelrichtung des Stromleiter-Drahtes 42 senkrecht zu der Wickelrichtung des Magnetisierungs-Drahtes 31 ausgerichtet. Dadurch kann in dem Stromleiter-Draht 42 bei einer Änderung der magnetischen Flussrichtung in dem Magnetisierungs-Draht 31 eine relativ große elektrische Spannung induziert werden. Zur Weiterleitung und Speicherung der induzierten elektrischen Spannung kann der Stromleiter-Draht 42 mit einer nicht dargestellten Einrichtung, insbesondere einer Speichereinrichtung zur Speicherung elektrischer Energie, verbunden sein.

Es sollte deutlich sein, dass der Hauptanspruch nicht auf das beschriebene Ausführungsbeispiel begrenzt ist. Wie bereits erwähnt, ist eine Anpassung der Magnete, des Vorspannelements und/oder der elektrischen Spule für den Fachmann selbstverständlich. Entsprechend können sowohl mehr als auch weniger Magnete an dem bewegbaren Körper angeordnet sein.

### Bezugszeichenliste

- 1: Spannungsgenerator
- 2: Erregereinheit
- 21: Magnet
- 23: Magnetfeld
- 3: Wandlereinheit
- 31: Magnetisierungs-Draht
- 32: hartmagnetischer Teil, Kern
- 33: weichmagnetischer Teil, Mantel
- 34: Drahtende
- 35: Drahtende
- 36: Tragkörper
- 36a: Tragkörperteil
- 36b: Tragkörperteil
- 37: Vorspannelement
- 4: Stromleitungseinheit
- 41: elektrische Spule
- 42: Stromleiter-Draht
- 9: Körper

## Patentansprüche

1. Spannungsgenerator (1) zur Umwandlung eines beweglichen magnetischen Feldes in elektrische Spannung, mit
- einer Erregereinheit (2), die zumindest einen an einem drehbar und/oder verschiebbar gelagerten Körper (9) angeordneten Magneten (21) zur Erzeugung eines Magnetfeldes (23) aufweist,
- einer mit der Erregereinheit (2) funktional zusammenwirkenden Wandlereinheit (3), die einen von dem Magnetfeld (23) magnetisierbaren Magnetisierungs-Draht (31) aufweist, und
- einer mit der Wandlereinheit (3) funktional zusammenwirkenden Stromleitungseinheit (4), die eine um die Wandlereinheit (3) angeordnete elektrische Spule (41) mit einem elektrisierbaren Stromleiter-Draht (42) aufweist, wobei der Magnetisierungs-Draht (31) über seinen Querschnitt einen hartmagnetischen Teil (32) und einen weichmagnetischen Teil (33) aufweist, **dadurch gekennzeichnet, dass**
der Magnetisierungs-Draht (31) einen hartmagnetischen Metallkern (32) und einen weichmagnetischen Metallmantel (33) aufweist, wobei der Magnetisierungs-Draht (31) um einen Tragkörper (36) gewickelt ist und eine axiale Zugspannung aufweist.

2. Spannungsgenerator (1) nach Anspruch 1, **dadurch gekennzeichnet, dass**
der Magnetisierungs-Draht (31) derart ausgebildet ist, dass der hartmagnetische Teil (32) und der weichmagnetische Teil (33) eine unterschiedliche Magnetisierung aufweisen können.

3. Spannungsgenerator (1) nach einem der Ansprüche 1 oder 2, **dadurch gekennzeichnet, dass**
der Magnetisierungs-Draht (31) derart ausgebildet ist, dass eine Änderung eines äußeren Magnetfeldes eine sprunghafte Änderung des Magnetisierung des hartmagnetischen Teils (32) und/oder eine sprunghafte Änderung der Magnetisierung des weichmagnetischen Teils entlang der Drahtachse (33) auslöst.

4. Spannungsgenerator (1) nach einem der voranstehenden Ansprüche, **dadurch gekennzeichnet, dass**
der Magnetisierungs-Draht (31) über seine Längserstreckung verdrillt ausgebildet ist.

5. Spannungsgenerator (1) nach einem der voranstehenden Ansprüche, **dadurch gekennzeichnet, dass**
die Wickelrichtung des Magnetisierungs-Drahtes (31) senkrecht zu der Wickelrichtung des Stromleiter-Drahtes (42) ausgerichtet ist.

6. Spannungsgenerator (1) nach einem der voranstehenden Ansprüche, **dadurch gekennzeichnet, dass**
der Magnetisierungs-Draht (31) zwei axiale Drahtenden (34, 35) aufweist, mit denen der Magnetisierungs-Draht (31) an dem Tragkörper (36) befestigt ist.

7. Spannungsgenerator (1) nach einem der voranstehenden Ansprüche, **dadurch gekennzeichnet, dass**
der Magnetisierungs-Draht (31) zwei axiale Drahtenden (34, 35) aufweist, die stoffschlüssig, kraftschlüssig und/oder formschlüssig miteinander verbunden sind.

8. Spannungsgenerator (1) nach einem der voranstehenden Ansprüche, **dadurch gekennzeichnet, dass**
der Tragkörper (36) plattenförmig ausgebildet ist und der Magnetisierungs-Draht (31) in Längserstreckung des Tragkörpers (36) um den Tragkörper (36) gewickelt ist.

9. Spannungsgenerator (1) nach einem der voranstehenden Ansprüche, **dadurch gekennzeichnet, dass**
der Tragkörper (36) in Längserstreckung längenveränderbar ausgebildet ist.

10. Spannungsgenerator (1) nach einem der voranstehenden Ansprüche, **dadurch gekennzeichnet, dass**
der Tragkörper (36) geeignet ist, dass auch nach einer Bewicklung mit dem Magnetisierungs-Draht (31) die Längenausdehnung des Tragkörpers (36) veränderbar ist

11. Spannungsgenerator (1) nach einem der voranstehenden Ansprüche, **dadurch gekennzeichnet, dass**
der Tragkörper (36) einen ersten Tragkörperteil (36a) und einen zweiten Tragkörperteil (36b) aufweist, und zwischen dem ersten Tragkörperteil (36a) und dem zweiten Tragkörperteil (36b) ein Vorspannelement (37) angeordnet ist, das die beiden Tragkörperteile (36a, 36b) in Längserstreckung des Tragkörpers (36) voneinander weg vorspannt.

12. Spannungsgenerator (1) nach Anspruch 11, **dadurch gekennzeichnet, dass**
das Vorspannelement (37) als eine elastische Feder ausgebildet ist.

13. Spannungsgenerator (1) nach einem der voranstehenden Ansprüche, **dadurch gekennzeichnet, dass**
die Breite der elektrischen Spule (41) im Wesentlichen der Länge des Tragkörpers (36) entspricht.

14. Spannungsgenerator (1) nach einem der voranstehenden Ansprüche, **dadurch gekennzeichnet, dass**
der Stromleiter-Draht (42) mit einer Speichereinrichtung (48) zur Speicherung elektrischer Energie verbunden ist.

## Claims

1. A voltage generator (1) for converting a movable magnetic field into electrical voltage, comprising:
- an excitation unit (2) having at least one magnet (21) arranged on a rotatably and/or moveably mounted body (9), said magnet being provided for generating a magnetic field (23),
- a conversion unit (3) functionally cooperating with the excitation unit (2) and comprising a magnetization wire (31) adapted to be magnetized by the magnetic field (23), and
- a power line unit (4) functionally cooperating with the conversion unit (3) and comprising an electric coil (41) arranged around the conversion unit (3), said electric coil having an electrifiable current conductor wire (42), wherein the magnetization wire (31) comprises, over its cross-section, a magnetically hard part (32) and a magnetically soft part (33),
**characterized in that**
the magnetization wire (31) comprises a magnetically hard metal core (41) and a magnetically soft metal jacket (33), the magnetization wire (31) being wound around a support body (36) and has an axial tension.

2. The voltage generator (1) according to claim 1, **characterized in that** the magnetization wire (31) is configured in such a manner that the magnetically hard part (32) and the magnetically soft part (33) can have different magnetizations.

3. The voltage generator (1) according to any one of claims 1 or 2, **characterized in that**
the magnetization wire (31) is configured in such a manner that a change of an external magnetic field will cause an abrupt change of the magnetization of the magnetically hard part (32) and/or an abrupt change of the magnetization of the magnetically soft part (33) along the wire axis (33).

4. The voltage generator (1) according to any one of the preceding claims, **characterized in that**
the magnetization wire (31) is twisted along its longitudinal extension.

5. The voltage generator (1) according to any one of the preceding claims, **characterized in that**
the winding direction of the magnetization wire (31) is oriented vertically to the winding direction of the current conductor wire (42).

6. The voltage generator (1) according to any one of the preceding claims, **characterized in that**
the magnetization wire (31) comprises two axial wire ends (34, 35) by which the magnetization wire (31) is fastened to the support body (36).

7. The voltage generator (1) according to any one of the preceding claims, **characterized in that**
the magnetization wire (31) comprises two axial wire ends (34, 35) which are connected to each other by material bonding, by force locking and/or by form locking.

8. The voltage generator (1) according to any one of the preceding claims, **characterized in that**
the support body (36) is plate-shaped and the magnetization wire (31) is wound around the support body (36) in the longitudinal extension of the support body (36).

9. The voltage generator (1) according to any one of the preceding claims, **characterized in that**
the support body (36) is adjustable in length in the longitudinal extension.

10. The voltage generator (1) according to any one of the preceding claims, **characterized in that**
the support body (36) is configured in such a manner that its longitudinal extension is adjustable also after the magnetization wire (31) has been wound around it.

11. The voltage generator (1) according to any one of the preceding claims, **characterized in that**
the support body (36) comprises a first support body part (36a) and a second support body part (36b), and that, between the first support body part (36a) and the second support body part (36b), a biasing member (37) is arranged for biasing the two support body parts (36a, 36b) away from each other in the longitudinal extension of the support body (36).

12. The voltage generator (1) according to claim 11, **characterized in that**
the biasing member (37) is formed as an elastic spring.

13. The voltage generator (1) according to any one of the preceding claims, **characterized in that**
the width of the electric coil (41) substantially corresponds to the length of the support body (36).

14. The voltage generator (1) according to any one of the preceding claims, **characterized in that**
the current conductor wire (42) is connected to a store for storage of electrical energy.

## Revendications

1. Générateur de tension (1) pour convertir un champ magnétique mobile en tension électrique, avec
- une unité d'excitation (2) avec au moins un aimant (21) disposé sur un corps monté rotatif et/ou déplaçable (9) pour générer un champ magnétique (23),
- une unité convertisseur (3) interagissant fonctionnellement avec ladite unité d'excitation (2) et comportant un fil magnétisant (31) apte à être magnétisé par le champ magnétique (23), et
- une unité de ligne électrique (4) interagissant fonctionnellement avec ladite unité de conversion (3) et présentant une bobine électrique (41) avec un fil conducteur de courant électrifiable (42) disposé autour de ladite unité de convertisseur (3), le fil magnétisant (31) ayant une partie magnétique dure (32) et une partie magnétique douce (33) sur sa section transversale
**caractérisé en ce que**
le fil magnétisant (31) ayant un noyau magnétique dur (32) en métal et une gaine magnétique douce (33) en métal, ledit fil magnétisant (31) étant enroulé autour d'un corps de support (36) et présentant une contrainte de traction axiale.

2. Générateur de tension (1) selon la revendication 1, **caractérisé en ce que**
le fil magnétisant (31) est réalisé de telle sorte que la partie magnétique dure (32) et la partie magnétique douce (33) peuvent avoir une magnétisation différente.

3. Générateur de tension (1) selon l'une des revendications 1 ou 2, **caractérisé en ce que** le fil magnétisant (31) est réalisé de telle sorte qu'une modification d'un champ magnétique externe déclenche un changement soudain de la magnétisation de la partie magnétique dure (32) et/ou un changement soudain de la magnétisation de la partie magnétique douce le long de l'axe du fil (33).

4. Générateur de tension (1) selon l'une quelconque des revendications précédentes, **caractérisé en ce que** le fil magnétisant (31) est torsadé sur son extension longitudinal.

5. Générateur de tension (1) selon l'une quelconque des revendications précédentes, **caractérisé en ce que** la direction d'enroulement du fil magnétisant (31) est alignée perpendiculairement à la direction d'enroulement du fil conducteur de courant (42).

6. Générateur de tension (1) selon l'une quelconque des revendications précédentes, **caractérisé en ce que** le fil magnétisant (31) a deux extrémités de fil axiales (34, 35) avec lesquelles le fil magnétisant (31) est fixé au corps de support (36).

7. Générateur de tension (1) selon l'une quelconque des revendications précédentes, **caractérisé en ce que** le fil magnétisant (31) a deux extrémités de fil axiales (34, 35) reliées l'une à l'autre avec un ajustement de matériau, un ajustement de force et/ou un ajustement de forme.

8. Générateur de tension (1) selon l'une quelconque des revendications précédentes, **caractérisé en ce que** le corps de support (36) est en forme de plaque et le fil magnétisant (31) est enroulé autour du corps de support (36) dans l'extension longitudinal du corps de support (36).

9. Générateur de tension (1) selon l'une quelconque des revendications précédentes, **caractérisé en ce que** le corps de support (36) est de longueur variable dans son extension longitudinal.

10. Générateur de tension (1) selon l'une quelconque des revendications précédentes, **caractérisé en ce que** le corps de support (36) est adapté de telle sorte que l'expansion en longueur du corps de support (36) peut être modifiée même après l'enroulement du fil magnétisant (31).

11. Générateur de tension (1) selon l'une quelconque des revendications précédentes, **caractérisé en ce que** le corps de support (36) présente une première partie de corps de support (36a) et une deuxième partie de corps de support (36b), et un élément de sollicitation (37) est agencé entre la première partie de corps de support (36a) et la deuxième partie de corps de support (36b), qui sollicite les deux parties du corps de support (36a, 36b) l'une de l'autre dans l'extension longitudinal du corps de support (36).

12. Générateur de tension (1) selon la revendication 11, **caractérisé en ce que**
l'élément de sollicitation (37) est conçu comme un ressort élastique.

13. Générateur de tension (1) selon l'une quelconque des revendications précédentes, **caractérisé en ce que** la largeur de la bobine électrique (41) correspond essentiellement à la longueur du corps de support (36).

14. Générateur de tension (1) selon l'une quelconque des revendications précédentes, **caractérisé en ce que** le fil conducteur de courant (42) est connecté à un dispositif de stockage (48) pour stocker l'énergie électrique.
